# EUROPÄISCHE PATENTSCHRIFT

(11) **EP 3 093 179 B1**
(45) Veröffentlichungstag und Bekanntmachung des Hinweises auf die Patenterteilung: **17.10.2018**
(21) Anmeldenummer: 16150429.5
(22) Anmeldetag: 07.01.2016
(51) Int. Cl.: B60K 17/10, B60K 17/30, B60K 17/356, B66F 9/065, E02F 3/28, F16H 61/4174

(54) **VERLADEFAHRZEUGSTRUKTUR**
LOADING VEHICLE STRUCTURE
STRUCTURE DE VEHICULE DE CHARGEMENT

(30) Priorität: 27.03.2015 DE 102015104761
(43) Veröffentlichungstag der Anmeldung: 16.11.2016
(73) Patentinhaber: CLAAS Selbstfahrende Erntemaschinen GmbH, 33428 Harsewinkel (DE)
(72) Erfinder: Dückingaus, Heinrich, 33649 Bielefeld (DE); Wiefel, Markus, 48361 Beelen (DE)

(56) Entgegenhaltungen:
- EP-A1- 1 733 995
- EP-A2- 0 949 187
- DE-A1- 1 500 345
- GB-A- 2 161 784

## Beschreibung

Die Erfindung betrifft ein Verladefahrzeug mit zumindest einem längenveränderlichen Hubarm nach dem Oberbegriff des Anspruchs 1.

Ein Verladefahrzeug ist unter anderem aus der GB 2161784 bekannt geworden. Das als sogenannter Teleskoplader ausgeführte Verladefahrzeug umfasst einen quer zur Längsrichtung des Verladefahrzeugs positionierten Antriebsmotor, der in einem der Fahrerkabine gegenüberliegenden Bereich einem in Längsrichtung des Verladefahrzeugs weisenden Tragrahmen zugeordnet ist. Die Abtriebswelle des Antriebsmotors erstreckt sich über diese Längsträgerstruktur hinweg in den fahrerkabinenseitigen Bereich und nimmt endseitig eine Hydraulikpumpe auf, die über ein Leitungssystem mit einem in den Antriebsstrang des Front- und Heckfahrwerks integrierten Hydraulikmotor verbunden ist. Der Hydraulikmotor ist dabei so ausgeführt, dass er sowohl die das Frontfahrwerk bildende Frontachse als auch die das Heckfahrwerk bildende Hinterachse antreibt und von dem Längsträger zum Schutz vor Bodenkontakt gekapselt ist. Derartige Ausführungen haben insbesondere die Nachteile, dass einerseits die sich kreuzenden Antriebsstränge einen erheblichen Bauraumbedarf erfordern, der die Bodenfreiheit sowie eine optimale Schwerpunktlage erheblich beeinträchtigt und andererseits der geringe Abstand der in vertikaler Richtung näher am Boden angeordneten Getriebe-Hydraulikmotoreinheit nur eine begrenzte Größe und damit begrenzte Antriebsleistungen zulässt.

Zur Realisierung einer kompakten Bauweise ist es zudem gemäß der EP 0 949 187 bekannt eine Motor-Getriebe-Einheit oberhalb von die Fahrwerke miteinander verbindenden Gelenkwellen anzuordnen. Indem hier eine Vielzahl von Gelenkwellen zur Energieübertragung eingesetzt werden, kann zumindest eine bessere Ausnutzung des vorhandenen Bauraumes zur Integration der Antriebseinheit erreicht werden. Nachteilig bei derartigen Ausführungen ist jedoch, dass wegen der Vielzahl von eingesetzten Gelenkwellen eine sehr aufwendige und damit auch kostenintensive Energieübertragung zwischen Vorder- und Hinterachse realisiert wird, die zudem noch wegen der fehlenden Kapselung starkem Verschleiß aufgrund von Verschmutzung oder Bodenkontakt ausgesetzt Ein Verladefahrzeug gemäß dem Oberbegriff des Anspruchs 1 ist aus der EP1733995A1 bekannt.

Die in derartigen Verladefahrzeuge, wie im Übrigen auch in Traktoren und sonstigen mobilen Arbeitsmaschinen eingesetzten Hydrauliksysteme umfassen - neben anderen Komponenten - mindestens eine Hydraulikpumpe, einen Sumpf oder ein Hydraulikreservoir/-tank, hydraulische Funktionen, wie beispielsweise Aktuatoren oder Zylinder, und Ventileinrichtungen bzw. Steuerventile, welche die Kommunikation zwischen der Hydraulikpumpe, dem Sumpf und der hydraulischen Funktion steuern. Hydraulikreservoirs oder Tanks wurden verwendet, um Öl oder Hydraulikflüssigkeit zu speichern und der Hydraulikflüssigkeit Zeit zum Entschäumen, Entlüften bzw. Entgasen der Hydraulikflüssigkeit zu geben. Wenn die Flüssigkeit nicht in ausreichender Weise entlüftet wird, ist die Hydraulikpumpe anfällig für Kavitationsschäden und Ausfälle. Mit Luft oder Gas versetzte Hydraulikflüssigkeit in einem Hydrauliksystem kann Geräusche verursachen, eine sprunghafte Wirkungsweise der hydraulischen Funktion bewirken, Wärmebildung verursachen und eine verringerte Lebensdauer der Komponenten zur Folge haben. So kann es beispielsweise in einigen Hydrauliksystemen von Traktoren oder Ladefahrzeugen vorkommen, dass Hydraulikflüssigkeit zumindest teilweise zerstäubt wird, wenn sie mit einer übermäßigen Geschwindigkeit aus einem Steuerventilauslass ausfließt, wenn die Hydraulikflüssigkeit zurück zum Sumpf fließt bzw. mit dem Sumpf in kommunizierender Verbindung steht. Dies bewirkt, dass die Hydraulikflüssigkeit in dem Sumpf mit Luft vermischt oder aufgeschäumt ist.

Üblicher Weise sind die Hydrauliksysteme der Fahrantriebe mobiler Arbeitsmaschinen zudem vollständig mit Hydraulikflüssigkeit gefüllt, sodass auf diese Weise der bekannten Schaumbildung entgegengewirkt wird. Zur Verbesserung des Wirkungsgrades derartiger Hydrauliksysteme sollen die Gehäuse der Hydrostatik-Komponenten nicht mit Hydrauliköl gefüllt sein, damit das den Wirkungsgrad verschlechternde sogenannte Planschen verhindert wird.

Es ist deshalb Aufgabe der Erfindung, die beschriebenen Nachteile des Standes der Technik zu vermeiden und insbesondere ein kompaktes, eine optimale Schwerpunktlage aufweisendes Verladefahrzeug zu schaffen und wobei dessen Antriebsstrang hohe Antriebsleitungen übertragen kann und einfach in mobile Arbeitsmaschine integrierbar ist

Diese Aufgabe wird erfindungsgemäß durch die kennzeichnenden Merkmale des Anspruchs 1 gelöst.

Indem der Antriebsmotor und das wenigstens eine Zentralgetriebe in Längsrichtung des Verladefahrzeugs gestaffelt zueinander und wechselseitig zum Antriebsstrang der Fahrwerke der Tragstruktur zugeordnet sind und der Antriebsmotor und eine diesem zugeordnete Fahrpumpe eine gemeinsame Antriebseinheit bilden und sich diese Antriebseinheit zumindest teilweise über den Antriebsstrang erstreckt und das Zentralgetriebe in der Weise in den Antriebsstrang integriert ist, dass es diesen zumindest teilweise überdeckt, wird erreicht, dass der Antriebsstrang eine kompakte Bauform aufweist, der eine optimale Schwerpunktlage des Verladefahrzeugs ermöglicht und zugleich den Einsatz größerer Antriebsaggregate zur Generierung und Übertragung großer Antriebsleistungen zulässt.

Eine besonders kompakte Bauform wird dann erreicht, wenn der Antriebsmotor quer zur Längsrichtung des Verladefahrzeugs und das Zentralgetriebe in Längsrichtung des Verladefahrzeugs von der Tragstruktur aufgenommen werden und der Antriebsmotor und das Zentralgetriebe über zumindest einen hydraulischen Antrieb miteinander verbunden sind. Auf diese Weise können der Antriebsmotor und das Zentralgetriebe optimal in die vorhandenen Freiräume an dem Verladefahrzeug eingepasst werden, ohne dass dies die Geometrie der übrigen Organe des Verladefahrzeugs beeinflusst.

In vorteilhafter Weiterbildung der Erfindung wird eine günstige Schwerpunktlage des Verladefahrzeugs dann erreicht, wenn die Tragstruktur zumindest einen Längsträger umfasst und das Zentralgetriebe und der Antriebsmotor im Wesentlichen unterhalb des Längsträgers angeordnet sind.

Eine konstruktiv einfache Umsetzung des hydraulischen Antriebs wird dadurch erreicht, dass der hydraulische Antrieb eine dem Antriebsmotor zugeordnete Hydraulikpumpe und einen dem Zentralgetriebe zugeordnete Hydraulikmotor umfasst und wobei die Hydraulikpumpe und der Hydraulikmotor über ein Leitungssystem miteinander verbunden sind. Eine hohe Flexibilität in der Anordnung der Hydraulikpumpe und des Hydraulikmotors ergibt sich zudem dann, wenn das Leitungssystem von Schlauchleitungen gebildet wird.

Ein kompakt ausgeführter Antriebsstrang wird in einer vorteilhaften Ausgestaltung der Erfindung dann erreicht, wenn der Hydraulikmotor zumindest einen Antriebsstutzen umfasst und der Antriebsstutzen des Hydraulikmotors auf einer Eingangswelle des Zentralgetriebes aufsitzt und diese antreibt.

Eine optimale Einpassung des Zentralgetriebes in die vorhandenen Strukturen an einem Verladefahrzeug wird in vorteilhafter Ausgestaltung der Erfindung dadurch noch unterstützt, dass dem Zentralgetriebe zumindest eine Eingangswelle und wenigstens eine Abtriebswelle zugeordnet sind und diese in Längsrichtung des Verladefahrzeugs weisen. Auf diese Weise ergibt sich eine extrem schlanke Bauform des Zentralgetriebes.

In vorteilhafter Weiterbildung der Erfindung kann das Zentralgetriebe so gestaltet sein, dass es zumindest eine erste und eine zweite Abtriebswelle umfasst und wobei die erste Abtriebswelle einen Teilantriebsstrang für die Vorderachse und die weitere Abtriebswelle einen Teilantriebsstrang für die Hinterachse antreibt. Dies hat vor allem den Vorteil, dass das Zentralgetriebe zumindest abtriebsseitig vollständig in den Antriebsstrang der Fahrwerke integriert sein kann.

In einer vorteilhaften Ausgestaltung der Erfindung können die Teilantriebsstränge eine Antriebsstrang bilden der in bewährter und an sich bekannter Weise eine mechanische und/oder hydraulische Energieübertragung zu den Fahrwerken ermöglichen

Die Lage und Kompaktheit des Zentralgetriebes lässt sich in vorteilhafter Weiterbildung der Erfindung auch dadurch noch steigem, wenn die Eingangswelle und die eine oder mehreren Abtriebswellen des Zentralgetriebes quer zur Längsrichtung des Verladefahrzeugs zueinander versetzt angeordnet sind. Auf diese Weise kann das Zentralgetriebe wenigstens teilweise unmittelbar in den Antriebsstrang der Fahrwerke integriert werden Zur Reduzierung des durch Verschmutzung und Bodenkontakt auftretenden Verschleißes in dem Antriebsstrang der Fahrwerke kann dieser in vorteilhafter Weiterbildung der Erfindung wenigstens teilweise von dem Längsträger der Tragstruktur gekapselt sein.

In vorteilhafter Weiterbildung kann die erfindungsgemässe Antriebsstruktur in Teleskopladern, Gabelstaplern und Radladem zum Einsatz kommen

Indem das Verladefahrzeug in einer vorteilhaften Weiterbildung der Erfindung das Verladefahrzeug eine Vorrichtung zur Entlüftung einer Hydraulikflüssigkeit eines hydraulischen Systems umfasst, wobei das hydraulische System zumindest eine Hydraulikmotoranordnung und einem mit dieser Hydraulikmotoranordnung hydraulisch gekoppelten Hydraulikflüssigkeitsspeicher umfasst und der zumindest einen Hydraulikmotoranordnung eine Absaugeinrichtung zur Absaugung der Hydraulikflüssigkeit in der Weise zugeordnet ist, dass die Absaugeinrichtung mittels Unterdruck Hydraulikflüssigkeit aus der Hydraulikmotoranordnung in den Hydraulikflüssigkeitsspeicher abführt, wird erreicht, dass sich auch bei schnelllaufenden Hydraulikmotoranordnungen eine zufriedenstellende Ölentlüftung einstellt.

Eine an beliebige Fahrsituationen angepasste Ölabsaugung wird in einer vorteilhaften Ausgestaltung der Erfindung dann erreicht, wenn die Absaugung der Hydraulikflüssigkeit mittels Unterdruck unabhängig von der Drehrichtung der Hydraulikmotoranordnung und damit unabhängig von der Fahrtrichtung einer die Hydraulikmotoranordnung umfassenden mobilen Arbeitsmaschine ist.

Ein konstruktiv einfach und kompakt ausgeführte Luftansaugung lässt sich dann realisieren, wenn die Hydraulikmotoranordnung über eine Luftansaugleitung mit einer in den Hydraulikflüssigkeitsspeicher integrierten Luftansaugeinrichtung verbunden ist. Der gleiche Effekt ergibt sich, wenn gemäß einer weiteren vorteilhaften Ausgestaltung der Erfindung die Luftansaugeinrichtung als Luftansaugrohr ausgeführt und in dem Hydraulikflüssigkeitsspeicher in vertikaler Richtung geneigt positioniert ist.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine Seitenansicht des erfindungsgemäßen Verladefahrzeugs
- Figur 2: eine Ansicht von unten des erfindungsgemäßen Verladefahrzeugs nach Figur 1
- Figur 3: eine schematische Detailansicht der erfindungsgemäßen Entlüftungsvorrichtung

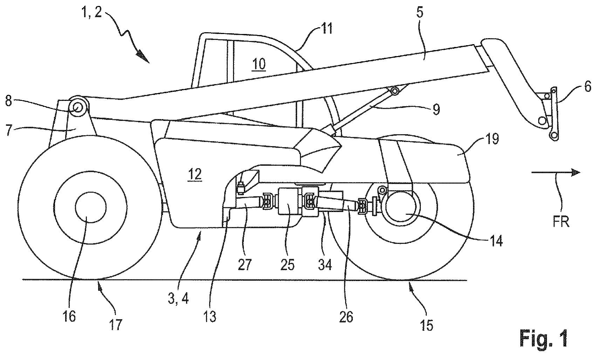

Figur 1 zeigt schematisch das als Teleskoplader 2 ausgeführte Verladefahrzeug 1. In an sich bekannter Weise nimmt die als Tragrahmen 3 ausgeführte Tragstruktur 4 in zentraler Position einen teleskopierbaren Hubarm 5 auf, dem frontseitig ein an sich bekannter Werkzeugadapter 6 zugeordnet ist. Der Hubarm 5 wird in seinem rückwärtigen Bereich von zumindest einer in Stützflanschen 7 quer zur Fahrtrichtung FR angeordneten Schwenkachse 8 schwenkbeweglich gelagert und wobei zur Realisierung der Schwenkbewegung dem Hubarm 5 untenseitig ein oder mehrere Hubzylinder 9 zugeordnet sind, die durch Druckbeaufschlagung oder Druckentlastung das Verschwenken des Hubarms 5 um die besagte Schwenkachse 8 ermöglichen. Das teleskopartige Ein- und Ausfahren des Hubarms 5 wird in an sich bekannter und deshalb nicht näher dargestellter Weise mittels weitere Hubzylinder realisiert. Der teleskopierbare Hubarm 5 unterteilt aufgrund seiner zentralen Anordnung das Verladefahrzeug 1 in einen kabinenseitigen Bereich 10 in dem die Fahrerkabine 11 dem Tragrahmen 3 zugeordnet ist und einen antriebsseitigen Bereich 12 in dem der Antriebsmotor 13 von dem Tragrahmen 3 aufgenommen wird. Zudem nimmt der Tragrahmen 3 in an sich bekannter Weise ein von einer Vorderachse 14 gebildetes Frontfahrwerk 15 und ein von einer Hinterachse 16 gebildetes Heckfahrwerk 17 auf.

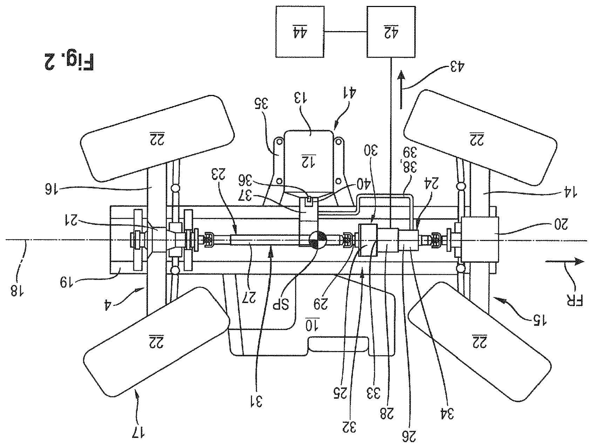

Gemäß Figur 2 umfasst die Tragstruktur 4 einen sich in Längsrichtung 18 des Verladefahrzeugs 1 erstreckenden Längsträger 19 an dem das Frontfahrwerk 15 und das Heckfahrwerk 17 befestigt sind. In dem dargestellten Ausführungsbeispiel nimmt sowohl die Vorderachse 14 als auch die Hinterachse 16 jeweils ein sogenanntes Differentialgetriebe 20, 21, welches entweder entsperrbar oder starr ausgeführt ist, zum Antrieb der Laufräder 22 auf. Jedes der Differentialgetriebe 20, 21 ist in erfindungsgemäßer Weise über mechanische Teilantriebsstränge 23, 24 mit einem Zentralgetriebe 25 gekoppelt. Die Teilantriebsstränge 23, 24 können im einfachsten Fall als an sich bekannte Gelenkwellen 26, 27 ausgeführt sein. Es liegt im Rahmen der Erfindung, dass die Teilantriebsstränge 23, 24 auch hydraulische Komponenten zur Übertragung der Antriebsenergie umfassen können. Das Zentralgetriebe 25 verfügt im dargestellten Ausführungsbeispiel über zwei in Fahrzeuglängsrichtung 18 weisende Abtriebswellen, 28, 29 die mit der jeweiligen Gelenkwelle 26, 27 antriebsverbunden sind. Das Zentralgetriebe 25 ist zudem so in die Tragstruktur 4 integriert, dass sein abtriebsseitiger Bereich 30 im wesentlichen in den von den Teilantriebssträngen 23, 24 gebildeten Antriebsstrang 31 der Fahrwerke 15, 17 integriert ist. Der antriebsseitige Bereich 32 des Zentralgetriebes 25 umfasst wenigstens eine Eingangswelle 33 die ebenfalls in Fahrzeuglängsrichtung 18 ausgerichtet ist. Damit ergibt sich für das Zentralgetriebe 25 eine Anordnung bei der die Eingangs- und Ausgangswellen 28, 29, 33 in Fahrzeuglängsrichtung 18 weisen und zueinander quer zur Fahrzeuglängsrichtung 18 versetzt sind.

Auf die Eingangswelle 33 des Zentralgetriebes 25 ist ein Hydraulikmotor 34 zum Antrieb des Zentralgetriebes 25 aufgesetzt. In an sich bekannter und deshalb nicht dargestellter Weise wird der Hydraulikmotor 34 über Schraubverbindungen an das Zentralgetriebe 25 angeflanscht. Zur optimalen Ausnutzung vorhandener Freiräume an dem Verladefahrzeug 1 ist das Zentralgetriebe 25 in dem kabinenseitigen Bereich 10 wenigstens teilweise unterhalb der Fahrerkabine 11 und nahe der Vorderachse 14 an der Tragstruktur 4 fixiert. Zur Reduzierung der Verschmutzung und zur Vermeidung von Bodenkontakt werden der Antriebsstrang 31 sowie das Zentralgetriebe 25 wenigstens teilweise von dem Längsträger 19 des Tragrahmens 3 gekapselt. Es liegt im Rahmen der Erfindung, dass der Antriebsstrang 31 und das Zentralgetriebe 25 auch vollständig von dem Längsträger 19 ummantelt sein können. In diesem Fall tritt nahezu kein verschmutzungs- und kollisionsbedingte Verschleiß auf.

In erfindungsgemäßer Weise nimmt die Tragstruktur 4 zudem den Antriebsmotor 13 auf, der im dargestellten Ausführungsbeispiel über einen Stützrahmen 35 an dem Längsträger 19 des Tragrahmens 3 abgestützt wird. Der Antriebsmotor 13 nimmt eine nahezu mittige Position zwischen den Fahrwerken 15, 17 des Teleskopladers 2 ein. Zugleich ist er in Längsrichtung 18 des Teleskopladers 2 versetzt zum Zentralgetriebe 25 in dem antriebsseitigen Bereich 12 des Teleskopladers 2 angeordnet. Auf diese Weise sind das Zentralgetriebe 25 und der Antriebsmotor 13 dem Antriebsstrang 31 der Fahrwerke 15, 17 wechselseitig zugeordnet. Dies hat insbesondere den Vorteil, dass die Antriebsaggregate 25, 13 nahe am Längsträger 19 des Tragrahmens 3 angeordnet werden können, sodass sich eine nahezu zentrale Lage des Schwerpunktes SP zwischen den Fahrwerken 15, 17 und damit eine große Fahrstabilität ergibt. Die Einbaulage des Antriebsmotors 13 erstreckt sich quer zur Längsrichtung 18 des Teleskopladers 2, sodass die Abtriebswelle 36 in Richtung des Antriebsstranges 31 der Fahrwerke 15,17 weist. Die Abtriebswelle 36 des Antriebsmotors 13 nimmt in erfindungsgemäßer Weise eine Hydraulikpumpe 37 auf, die einfachstenfalls mittels Schraubverbindungen am Antriebsmotor 13 angeflanscht ist und über die Abtriebswelle 36 und einen der Hydraulikpumpe 37 zugeordneten Antriebsstutzen 40 von dem Antriebsmotor 13 angetrieben wird. Die Hydraulikpumpe 37 des Antriebsmotors 13 und der Hydraulikmotor 34 des Zentralgetriebes 25 sind über ein Leitungssystem 38 zur Übertragung des Hydraulikmediums miteinander verbunden. Zur Erreichung einer hohen Flexibilität bei der Anordnung der verschiedenen Antriebsaggregate 13, 25, 34, 37 besteht das Leitungssystem 38 in vorteilhafter Weise aus Schlauchleitungen 39. Zur Erreichung einer niedrigen Lage des Schwerpunktes SP ist es von Vorteil, wenn die Antriebsaggregate 13, 25, 34, 37 unterhalb des Längsträgers 19 angeordnet sind. Indem die von dem Antriebsmotor 13 und der zugeordneten Hydraulikpumpe 37 gebildete Antriebseinheit 41 erfindungsgemäß so in dem antriebsseitigen Bereich 12 angeordnet ist, dass sich die Antriebseinheit 41 zumindest teilweise in den Bereich des Antriebsstranges 31 der Fahrwerke 15, 17 erstreckt, wird eine kompakte Ausführung der gesamten Antriebsstruktur des Verladefahrzeugs ermöglicht, die zudem sicherstellt, dass die zulässigen Außenabmessungen der mobilen Arbeitsmaschine (X) nicht überschritten werden. Der mit dem Zentralgetriebe 25 gekoppelten Hydraulikmotoranordnung 34 ist zudem die erfindungsgemäße Absaugeinrichtung 42 zugeordnet, die in noch näher zu beschreibender Weise mittels Unterdruck Hydraulikflüssigkeit 43 aus der Hydraulikmotoranordnung 34 in einen Hydraulikflüssigkeitsspeicher 44 abführt.

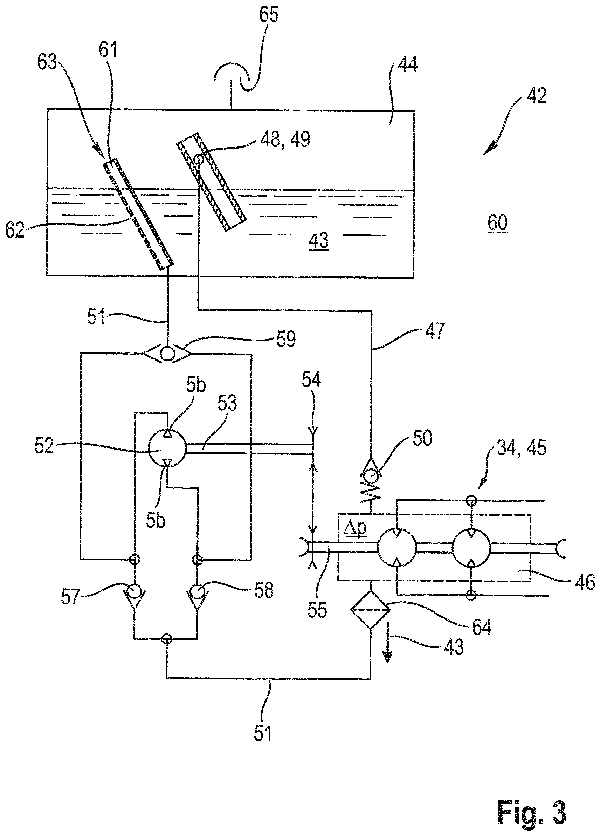

Figur 3 zeigt nun die erfindungsgemäße Absaugeinrichtung 42 im Detail. Die als Doppelmotor 45 ausgeführte Hydraulikmotoranordnung 34 ist in ein Gehäuse 46 integriert. Über eine Luftansaugleitung 47 ist das Gehäuse 46 mit dem Hydraulikflüssigkeitsspeicher 44 verbunden. Der Hydraulikflüssigkeitsspeicher 44 ist nur teilwiese mit Hydraulikflüssigkeit 43 gefüllt, sodass eine der Luftansaugleitung 47 zugeordnete Luftansaugeinrichtung 48 im Inneren des Hydraulikflüssigkeitsspeichers 44 oberhalb des Hydraulikflüssigkeitspegels positioniert sein kann. In einer Ausgestaltung kann die Luftansaugeinrichtung 48 als Luftansaugrohr 49 ausgeführt und in dem Hydraulikflüssigkeitsspeicher 44 in vertikaler Richtung geneigt positioniert sein. Anderenends mündet die Luftansaugleitung 47 in ein dem Gehäuse 46 der Hydraulikmotoranordnung 34 zugeordnetes Rückschlagventil 50, dessen Durchlass in Abhängigkeit von einem definierten Unterdruck im Gehäuse 46 freigegeben wird. Das Rückschlagventil 50 steht unter Federvorspannung und realisiert einen Öffnungsdruck von bis zu 1 bar, vorzugsweise 0,6 bar.

Erfindungsgemäß ist der Absaugeinrichtung 42 zur Generierung des Unterdrucks Δp im Gehäuse 46 der Hydraulikmotoranordnung 34 zumindest eine in eine Absaugleitung 51 integrierte Hydraulikpumpe 52 zugeordnet, deren Eingangswelle 53 über eine Getriebestufe 54 mit der Abtriebswelle 55 der Hydraulikmotoranordnung 34 mechanisch gekoppelt ist. Es liegt im Rahmen der Erfindung, dass die Getriebestufe 54 als Räder- oder Riementrieb ausgeführt sein kann. Die Hydraulikpumpe 52 ist in der Weise in die Absaugleitung 51 integriert, dass der Zu- und Ablaufseite 56 der Hydraulikpumpe 52 jeweils ein Rückschlagventil 57, 58 zugeordnet ist, wobei die Rückschlagventile 57, 58 in Parallelschaltung mit einem Wechselventil 59 verbunden sind und das Wechselventil 59 den Zugang zum Hydraulikflüssigkeitsspeicher 44 freigibt oder verschließt. Die Positionierung der Rückschlagventile 57, 58 in dem zwischen der Hydraulikmotoranordnung 34 und der Hydraulikpumpe 52 liegenden Abschnitt der Absaugleitung 51 hat den Zweck, dass unabhängig von der Drehrichtung der Abtriebswelle 55 des Doppelmotors 45 stets eine Absaugung von Hydraulikflüssigkeit 43 aus dem Gehäuse 46 des Doppelmotors 45 sichergestellt ist. Damit wird sowohl bei Vorwärts- als auch Rückwärtsfahrt der mobilen Arbeitsmaschine 60 eine Absaugung von Hydraulikflüssigkeit 43 aus dem Gehäuse 46 bei Unterdruck realisiert. Zugleich ist sichergestellt, dass bei Stillstand der mobilen Arbeitsmaschine keine Absaugung von Hydraulikflüssigkeit 43 erfolgt, da in diesem Fall die Abtriebswelle 55 des Doppelmotors 45 stillsteht. Fällt die Hydraulikpumpe 52 aus, etwa wegen eines Defektes der Getriebestufe 54, ermöglichen die beschriebenen Rückschlagventile 57, 58 im Zusammenwirken mit dem Wechselventil 59 dennoch einen Rückfluss von Hydraulikflüssigkeit 43 aus dem Gehäuse 46 des Doppelmotors 45 zum Hydraulikflüssigkeitsspeicher 44. Die in den Hydraulikflüssigkeitsspeicher 44 mündende Absaugleitung ist an ihrem speicherseitigen Ende mit einem Auslassrohr 61 gekoppelt, welches in dem Hydraulikflüssigkeitsspeicher 44 in vertikaler Richtung geneigt angeordnet ist. Das Auslassrohr 61 verfügt über Öffnungen 62 durch die die abgesaugte Hydraulikflüssigkeit 43 in den Hydraulikflüssigkeitsspeicher 44 austreten kann. Obenseitig verfügt das Auslassrohr 61 über eine weiter Öffnung 63 durch die die in dem Öl gebundenen Luftblasen abgeschieden werden können. Indem das Gehäuse 46 der Hydraulikmotoranordnung 34 im Betrieb der mobilen Arbeitsmaschine 60 permanent unter Unterdruck Δp steht wird in einem ersten Schritt sichergestellt, dass sich die in der aufgeschäumten Hydraulikflüssigkeit 43 eingeschlossenen Luftbläschen zu größeren Luftblasen verbinden, die sich dann in einem weiteren Schritt, nämlich beim Durchlaufen des Auslassrohres 61 einfacher von der Hydraulikflüssigkeit 43 trennen und abscheiden lassen. Dies Entlüftungseffekt ist besonders bei schnelllaufenden Hydraulikmotoranordnungen von besonderer Bedeutung, da diese verstärkt zum

Um neben der Entlüftung der abzusaugenden Hydraulikflüssigkeit 43 auch deren Reinigung zu ermöglichen, ist der Absaugleitung 51 im Bereich zwischen Hydraulikmotoranordnung 34 und Hydraulikpumpe 52 der Absaugeinrichtung 42 eine Filtereinrichtung 64 zugeordnet. In an sich bekannter Weise ist der Hydraulikflüssigkeitsspeicher 44 geschlossen ausgeführt und umfasst eine Luftein- und -auslassöffnung 65.

**Bezugszeichenliste:**

| | | | |
|---|---|---|---|
| 1 | Verladefahrzeug | 33 | Eingangswelle |
| 2 | Teleskoplader | 34 | Hydraulikmotoranordnung |
| 3 | Tragrahmen | 35 | Stützrahmen |
| 4 | Tragstruktur | 36 | Abtriebswelle |
| 5 | Hubarm | 37 | Hydraulikpumpe |
| 6 | Werkzeugadapter | 38 | Leitungssystem |
| 7 | Stützflansch | 39 | Schlauchleitungen |
| 8 | Schwenkachse | 40 | Antriebsstutzen |
| 9 | Hubzylinder | 41 | Antriebseinheit |
| 10 | kabinenseitiger Bereich | 42 | Absaugeinrichtung |
| 11 | Fahrerkabine | 43 | Hydraulikflüssigkeit |
| 12 | antriebsseitiger Bereich | 44 | Hydraulikflüssigkeitsspeicher |
| 13 | Antriebsmotor | 45 | Doppelmotor |
| 14 | Vorderachse | 46 | Gehäuse |
| 15 | Frontfahrwerk | 47 | Luftansaugleitung |
| 16 | Hinterachse | 48 | Luftansaugeinrichtung |
| 17 | Heckfahrwerk | 49 | Luftansaugrohr |
| 18 | Längsrichtung | 50 | Rückschlagventil |
| 19 | Längsträger | 51 | Absaufleitung |
| 20 | Differentialgetriebe | 52 | Hydraulikpumpe |
| 21 | Differentialgetriebe | 53 | Eingangswelle |
| 22 | Laufräder | 54 | Getriebestufe |
| 23 | Teilantriebsstrang | 55 | Abtriebswelle |
| 24 | Teilantriebsstrang | 56 | Zu-/Ablauf Pumpe |
| 25 | Zentralgetriebe | 57 | Rückschlagventil |
| 26 | Gelenkwelle | 58 | Rückschlagventil |
| 27 | Gelenkwelle | 59 | Wechselventil |
| 28 | Abtriebswelle | 60 | Mobile Arbeitsmaschine |
| 29 | Abtriebswelle | 61 | Auslassrohr |
| 30 | Bereich | 62 | Öffnungen |
| 31 | Antriebsstrang | 63 | Luftaustrittsöffnung |
| 32 | Bereich | 64 | Filtereinrichtung |
| | | 65 | Luftein-und -auslassöffnung |
| | | | |
| | | FR | Fahrtrichtung |
| | | SP | Schwerpunkt |
| | | Δp | Unterdruck |

## Patentansprüche

1. Verladefahrzeug mit zumindest einem längenveränderlichen Hubarm und wobei der Hubarm in einer Tragstruktur (3, 4) über zumindest einen Hubzylinder schwenkbeweglich abgestützt wird und die Tragstruktur (3, 4) über wenigstens ein Frontfahrwerk und zumindest ein Heckfahrwerk verfügt und wobei das Frontfahrwerk und das Heckfahrwerk über einen Antriebsstrang (31) miteinander gekoppelt sind und die Tragstruktur weiterhin zumindest einen Antriebsmotor (13) und wenigstens ein Zentralgetriebe (25) aufnimmt wobei der zumindest eine Antriebsmotor (13) und das wenigstens eine Zentralgetriebe (25) in Längsrichtung (18) des Verladefahrzeugs (1,2) gestaffelt zueinander angeordnet sind, **dadurch gekennzeichnet, dass** der Antriebsmotor (13) und eine diesem zugeordnete Fahrpumpe (37) eine gemeinsame Antriebseinheit (41) bilden und sich diese Antriebseinheit (41) zumindest teilweise über den Antriebsstrang (31) erstreckt und das Zentralgetriebe (25) in der Weise in den Antriebsstrang (31) integriert ist, dass es diesen zumindest teilweise überdeckt.

2. Verladefahrzeug mit zumindest einem längenveränderlichen Hubarm nach Anspruch 1,
**dadurch gekennzeichnet,**
**dass** der Antriebsmotor (13) quer zur Längsrichtung (18) des Verladefahrzeugs (1,2) und das Zentralgetriebe (25) in Längsrichtung (18) des Verladefahrzeugs (1,2) von der Tragstruktur (3, 4) aufgenommen wird und der Antriebsmotor (13) und das Zentralgetriebe (25) über zumindest einen hydraulischen Antrieb (34, 37, 38) miteinander verbunden sind.

3. Verladefahrzeug mit zumindest einem längenveränderlichen Hubarm nach einem der vorhergehenden Ansprüche,
**dadurch gekennzeichnet,**
**dass** die Tragstruktur (3, 4) zumindest einen Längsträger (19) umfasst und das Zentralgetriebe (25) und der Antriebsmotor (13) im Wesentlichen unterhalb des Längsträgers (19) angeordnet sind.

4. Verladefahrzeug mit zumindest einem längenveränderlichen Hubarm nach einem der vorhergehenden Ansprüche,
**dadurch gekennzeichnet,**
**dass** der hydraulische Antrieb (34, 37, 38) eine dem Antriebsmotor (13) zugeordnete Hydraulikpumpe (37) und einen dem Zentralgetriebe (25) zugeordnete Hydraulikmotor (34) umfasst und wobei die Hydraulikpumpe (37) und der Hydraulikmotor (34) über ein Leitungssystem (38) miteinander verbunden sind.

5. Verladefahrzeug mit zumindest einem längenveränderlichen Hubarm nach einem der vorhergehenden Ansprüche,
**dadurch gekennzeichnet,**
**dass** der Hydraulikmotor (34) zumindest einen Antriebsstutzen (40) umfasst und der Antriebsstutzen (40) des Hydraulikmotors (34) auf einer Eingangswelle (33) des Zentralgetriebes (25) aufsitzt und diese antreibt.

6. Verladefahrzeug mit zumindest einem längenveränderlichen Hubarm nach einem der vorhergehenden Ansprüche,
**dadurch gekennzeichnet,**
**dass** dem Zentralgetriebe (25) zumindest eine Eingangswelle (33) und wenigstens eine Abtriebswelle (28, 29) zugeordnet sind und diese in Längsrichtung (18) des Verladefahrzeugs (1, 2) weisen.

7. Verladefahrzeug mit zumindest einem längenveränderlichen Hubarm nach einem der vorhergehenden Ansprüche,
**dadurch gekennzeichnet,**
**dass** dem Zentralgetriebe (25) zumindest eine erste und eine zweite Abtriebswelle (28, 29) zugeordnet ist und wobei die erste Abtriebswelle (28) einen Teilantriebsstrang (24) für die Vorderachse (14) und die weitere Abtriebswelle (29) einen Teilantriebsstrang (23) für die Hinterachse (16) antreibt.

8. Verladefahrzeug mit zumindest einem längenveränderlichen Hubarm nach Anspruch 20,
**dadurch gekennzeichnet,**
**dass** die Teilantriebsstränge (23, 24) einen Antriebsstrang (31) bilden und der Antriebsstrang (31) eine mechanische und/oder hydraulische Energieübertragung ermöglicht.

9. Verladefahrzeug mit zumindest einem längenveränderlichen Hubarm nach einem der vorhergehenden Ansprüche,
**dadurch gekennzeichnet,**
**dass** die Eingangswelle (33) und die eine oder mehreren Abtriebswellen (28, 29) des Zentralgetriebes (25) quer zur Längsrichtung (18) des Verladefahrzeugs (1, 2) zueinander versetzt angeordnet sind.

10. Verladefahrzeug mit zumindest einem längenveränderlichen Hubarm nach einem der vorhergehenden Ansprüche,
**dadurch gekennzeichnet,**
**dass** der von den Teilantriebssträngen (23, 24) gebildete Antriebsstrang (31) der Fahrwerke (15, 17) wenigstens teilweise von dem Längsträger (19) der Tragstruktur (3, 4) gekapselt wird.

11. Verladefahrzeug mit zumindest einem längenveränderlichen Hubarm nach einem der vorhergehenden Ansprüche,
**dadurch gekennzeichnet,**
**dass** das Verladefahrzeug (1) als Teleskoplader (2), Gabelstapler oder Radlader ausgebildet ist.

## Claims

1. A loading vehicle comprising at least one variable-length lift arm and wherein the lift arm is supported in a carrier structure (3, 4) pivotably moveably by way of at least one lift cylinder and the carrier structure (3, 4) has at least one front chassis assembly and at least one tail chassis assembly and wherein the front chassis assembly and the tail chassis assembly are coupled together by way of a drive train (31) and the carrier structure further accommodates at least one drive engine (13) and at least one central transmission (25), wherein the at least one drive engine (13) and the at least one central transmission (25) are arranged in staggered relationship with each other in the longitudinal direction of the loading vehicle (1, 2), **characterised in that** the drive engine (13) and a drive pump (37) associated therewith form a common drive unit (41) and said drive unit (41) extends at least partially over the drive train (31) and the central transmission (25) is integrated into the drive train (31) in such a way that it at least partially covers over same.

2. A loading vehicle comprising at least one variable-length lift arm according to claim 1 **characterised in that** the drive engine (13) is accommodated transversely relative to the longitudinal direction (18) of the loading vehicle (1, 2) and the central transmission (25) is accommodated in the longitudinal direction (18) of the loading vehicle (1, 2) by the carrier structure (3, 4) and the drive engine (13) and the central transmission (25) are connected together by way of at least one hydraulic drive (34, 37, 38).

3. A loading vehicle comprising at least one variable-length lift arm according to one of the preceding claims **characterised in that** the carrier structure (3, 4) includes at least one longitudinal bearer (19) and the central transmission (25) and the drive engine (13) are arranged substantially beneath the longitudinal bearer (19).

4. A loading vehicle comprising at least one variable-length lift arm according to one of the preceding claims **characterised in that** the hydraulic drive (34, 37, 38) includes a hydraulic pump (37) associated with the drive engine (13) and a hydraulic motor (34) associated with the central transmission (25) and wherein the hydraulic pump (37) and the hydraulic motor (34) are connected together by way of a conduit system (38).

5. A loading vehicle comprising at least one variable-length lift arm according to one of the preceding claims **characterised in that** the hydraulic motor (35) includes at least one drive connection (40) and the drive connection (40) of the hydraulic motor (34) is fitted on an input shaft (33) of the central transmission (25) and drives same.

6. A loading vehicle comprising at least one variable-length lift arm according to one of the preceding claims **characterised in that** at least one input shaft (33) and at least one drive output shaft (28, 29) are associated with the central transmission (25) and same face in the longitudinal direction (18) of the loading vehicle (1, 2).

7. A loading vehicle comprising at least one variable-length lift arm according to one of the preceding claims **characterised in that** at least a first and a second drive output shaft (28, 29) is associated with the central transmission (25) and wherein the first drive output shaft (28) drives a drive train portion (24) for the front axle (14) and the further drive output shaft (29) drives a drive train portion (23) for the rear axle (16).

8. A loading vehicle comprising at least one variable-length lift arm according to claim 7 **characterised in that** the drive train portions (23, 24) form a drive train (31) and the drive train (31) permits mechanical and/or hydraulic energy transmission.

9. A loading vehicle comprising at least one variable-length lift arm according to one of the preceding claims **characterised in that** the input shaft (33) and the one or more drive output shafts (28, 29) of the central transmission (25) are arranged in mutually displaced relationship transversely relative to the longitudinal direction (18) of the loading vehicle (1, 2).

10. A loading vehicle comprising at least one variable-length lift arm according to one of the preceding claims **characterised in that** the drive train (31) of the chassis assemblies (15, 17), that is formed by the drive train portions (23, 24), is at least partially encapsulated by the longitudinal bearer (19) of the carrier structure (3, 4).

11. A loading vehicle comprising at least one variable-length lift arm according to one of the preceding claims **characterised in that** the loading vehicle (1) is in the form of a telescopic loader (2), a fork lift truck or a wheel loader.

## Revendications

1. Véhicule de chargement comprenant au moins un bras de levage, et le bras de levage prenant appui dans une structure porteuse (3, 4) avec une possibilité de pivotement par l'intermédiaire d'au moins un vérin de levage, et la structure porteuse (3, 4) possédant au moins un train de roulement avant et au moins un train de roulement arrière, et le train de roulement avant et le train de roulement arrière étant couplés l'un à l'autre par l'intermédiaire d'une chaîne de transmission (31), et la structure porteuse recevant en outre au moins un moteur d'entraînement (13) et au moins une transmission centrale (25), le au moins un moteur d'entraînement (13) et la au moins une transmission centrale (25) étant disposés l'un par rapport à l'autre de manière échelonnée dans la direction longitudinale (18) du véhicule de chargement (1, 2), **caractérisé en ce que** le moteur d'entraînement (13) et une pompe de marche (37) associée à celui-ci forment une unité d'entraînement commune (41) et **en ce que** cette unité d'entraînement (41) s'étend au moins en partie sur la chaîne de transmission (31), et la transmission centrale (25) est intégrée à la chaîne de transmission (31) de façon qu'elle recouvre celle-ci au moins en partie.

2. Véhicule de chargement comprenant au moins un bras de levage à longueur variable selon la revendication 1, **caractérisé en ce que** le moteur d'entraînement (13) est reçu par la structure porteuse (3, 4) transversalement à la direction longitudinale (18) du véhicule de chargement (1, 2) et la transmission centrale (25) l'est dans la direction longitudinale (18) du véhicule de chargement (1, 2), et le moteur d'entraînement (13) et la transmission centrale (25) sont reliés l'un à l'autre par l'intermédiaire d'au moins un entraînement hydraulique (34, 37, 38).

3. Véhicule de chargement comprenant au moins un bras de levage à longueur variable selon une des revendications précédentes, **caractérisé en ce que** la structure porteuse (3, 4) comporte au moins un longeron (19), et la transmission centrale (25) et le moteur d'entraînement (13) sont disposés sensiblement sous le longeron (19) .

4. Véhicule de chargement comprenant au moins un bras de levage à longueur variable selon une des revendications précédentes, **caractérisé en ce que** l'entraînement hydraulique (34, 37, 38) comporte une pompe hydraulique (37) associée au moteur d'entraînement (13) et un moteur hydraulique (34) associé à la transmission centrale (25), et la pompe hydraulique (37) et le moteur hydraulique (34) étant reliés l'un à l'autre par l'intermédiaire d'un système de conduites (38).

5. Véhicule de chargement comprenant au moins un bras de levage à longueur variable selon une des revendications précédentes, **caractérisé en ce que** le moteur hydraulique (34) comporte au moins un manchon d'entraînement (40), et le manchon d'entraînement (40) du moteur hydraulique (34) repose sur un arbre d'entrée (33) de la transmission centrale (25) et entraîne celui-ci.

6. Véhicule de chargement comprenant au moins un bras de levage à longueur variable selon une des revendications précédentes, **caractérisé en ce qu'**à la transmission centrale (25) sont associés au moins un arbre d'entrée (33) et au moins un arbre de sortie (28, 29), et ceux-ci sont orientés dans la direction longitudinale (18) du véhicule de chargement (1, 2).

7. Véhicule de chargement comprenant au moins un bras de levage à longueur variable selon une des revendications précédentes, **caractérisé en ce qu'**à la transmission centrale (25) sont associés au moins un premier et un second arbre de sortie (28, 29), et le premier arbre de sortie (28) entraînant une chaîne partielle de transmission (24) pour l'essieu avant (14), et l'arbre de sortie supplémentaire (29) entraînant une chaîne partielle de transmission (23) pour l'essieu arrière (16).

8. Véhicule de chargement comprenant au moins un bras de levage à longueur variable selon la revendication 20, **caractérisé en ce que** les chaînes partielles de transmission (23, 24) forment une chaîne de transmission (31), et la chaîne de transmission (31) permet une transmission d'énergie mécanique et/ou hydraulique.

9. Véhicule de chargement comprenant au moins un bras de levage à longueur variable selon une des revendications précédentes, **caractérisé en ce que** l'arbre d'entrée (33) et les un ou plusieurs arbres de sortie (28, 29) de la transmission centrale (25) sont disposés en étant décalés les uns par rapport aux autres transversalement à la direction longitudinale (18) du véhicule de chargement (1, 2).

10. Véhicule de chargement comprenant au moins un bras de levage à longueur variable selon une des revendications précédentes, **caractérisé en ce que** la chaîne de transmission (31) des trains de roulement (15, 17) formée par les chaînes partielles de transmission (23, 24) est au moins partiellement encapsulée par le longeron (19) de la structure porteuse (3, 4).

11. Véhicule de chargement comprenant au moins un bras de levage à longueur variable selon une des revendications précédentes, **caractérisé en ce que** le véhicule de chargement (1) est conformé en chargeur télescopique (2), en chariot élévateur à fourche ou en chargeuse à pneus.
